# EUROPÄISCHE PATENTANMELDUNG

(11) **EP 0 876 046 A2**
(43) Veröffentlichungstag der Anmeldung: **04.11.1998**
(21) Anmeldenummer: 98105144.4
(22) Anmeldetag: 21.03.1998
(51) Int. Cl.: H04M 15/00

(54) **Verfahren zur Steuerung der Gebührenbelastung in intelligenten Netzen**

(30) Priorität: 30.04.1997 DE 19718323
(71) Anmelder: Deutsche Telekom AG, 53113 Bonn (DE)
(72) Erfinder: Liebeck, Ursula, Dipl.-Ing. (FH), 74670 Forchtenberg (DE)

(57) **Zusammenfassung**

Das hier beschriebene Verfahren zur Steuerung der Gebührenbelastung in intelligenten Netzen, insbesondere zur kontrollierbaren Werbungsentgegennahme in Verbindung mit preisreduzierten Telefon- bzw. Datenübertragungsgebühren oder dem Internetzugang erfolgt dadurch, daß zu einer nicht vorhersehbaren Zeit oder zu einer bestimmten Zeit während oder gegen Ende der Werbung eine akustische oder visuelle Aufforderung an die Beworbenen ergeht, eine bestimmte oder zufällig vorgegebene Taste oder Tastenfolge zu drücken oder akustisch eine Antwort einzugeben, wodurch bestätigt wird, zugesehen bzw. zugehört zu haben. Durch die nicht vorhersehbare Zeit der Aufforderung an die Beworbenen oder aber die nicht vorhersehbare Betätigung der Taste oder Tastenfolge oder durch eine akustische Antwort oder sonstige Signaleingabe wird ein automatisiertes Reagieren vermieden und die volle Aufmerksamkeit des Beworbenen erreicht. Auch wird verhindert, daß eine automatisierte Elektronik die Anwesenheit eines Beworbenen zeitweise ersetzt. Durch die Aussendung eines Signals oder mehrerer elektrischer Signale des jeweils Beworbenen an den jeweiligen Netzbetreiber durch Betätigen einer bestimmten oder zufällig vorgegesehenen Taste oder vorgegebenen Tastenfolge bzw. eine akustische Antwort beim Telefonieren während oder nach der Werbung, werden die ausgesendeten Signale vom Netzwerkbetreiber automatisiert erkannt und verarbeitet, um eine Gebührenreduktion bzw. kostenfreie Zeiteinheiten zu berechnen und andere Auswertungen vorzunehmen.

## Beschreibung

Die Erfindung betrifft ein Verfahren zur Steuerung der Gebührenbelastung in intelligenten Netzen, insbesondere zur kontrollierbaren Werbungsentgegennahme bei preisreduzierten Telefon- bzw. Datenübertragungsgebühren an einem oder mehreren Endgerät(en) zu einer oder mehreren Zielrufnummer(n).

Es ist allgemein bekannt, daß Werbung in zunehmendem Maße von Beworbenen nicht nur skeptisch, sondern sogar ablehnend empfunden wird. Dies beruht auf einer Vielzahl von Vorgängen und Einflüssen, die im Einzelnen nicht restlos geklärt sind. Es sei hier nur auf das sogenannte Zappen bei der TV-Werbung hingewiesen, das heißt die Beworbenen flüchten vor der Werbung durch rasches Umschalten auf andere Sender. Es gibt bislang kaum Möglichkeiten, diesem Verhalten entgegenzuwirken. Nachteilig bei bisheriger Werbung ist daher auch die fehlende Nachvollziehbarkeit der tatsächlichen Entgegennahme der ausgestrahlten bzw. gesendeten Werbung.

Im Telefonvermittlungsdienst sind gebührenfreie Rufnummern bekannt, wie zum Beispiel die 0130-Rufnummer, um bestimmte gebührenfreie Dienste, wie auch zum Beispiel Werbung, bewußt vom Anrufer in Anspruch zu nehmen. Dieser gebührenfreie Dienst für Anrufer wird vor allem von Hotels, Werbeagenturen und Versandhäusern bzw. anderen Bestelldiensten genutzt, um den Kunden bzw. dem Anrufer die Zimmerreservierung bzw. die Auftragserteilung gebührenfrei zu ermöglichen. Ein Nachteil dieses Verfahrens besteht jedoch darin, daß der Diensteanbieter bzw. Nutzer des gebührenfreien automatischen Dienstes keinen privilegierten Kundenkreis festlegen kann, um ihn zum Beispiel gezielt mit Werbung zu beeinflussen. In "Neue Dienste im intelligenten Telefonnetz" von Wilhelm Krusch und Gerhard Krohn, Deckerverlag, Heidelberg, 1994, 2. Auflage, sind sowohl neue Dienste in intelligenten Telefonnetzen beschrieben als auch das intelligente Telefonnetz selbst. Zum Beispiel ist auf Seite 134 ff das Funktionsmodell des intelligenten Netzes gezeigt und beschrieben. Wie bereits weiter oben beschrieben, ist es zum Beispiel für gewerbliche Anbieter bzw. Nutzer möglich, durch Übernahme der Gebühren oder Teilen von Gebühren ein wirksames Mittel zum Ausbau und Halten der Kundenbeziehungen zu schaffen. Die Übernahme von Teilen der Gesprächsgebühren hat eine stark verkehrslenkende und verkehrserhöhende bzw. Werbewirkung. Der ökonomische Effekt liegt darin, daß im Regelfall eine Überwälzung der Telefonkommunikationskosten bzw. der Datenübertragungskosten auf den Werbenden und meist wirtschaftlich stärkeren Partner erfolgt. Der Service mit der 0130-Rufnummer hat doch auch den Nachteil, daß der Anbieter, das heißt der Inhaber der Zielrufnummer eine zusätzliche 0130-Rufnummer einrichten muß, die für viele derartige Zwecke zu unflexibel und zu teuer ist.

Der Erfindung liegt deshalb die Aufgabe zugrunde, ein Verfahren zur Steuerung der Gebührenbelastung in intelligenten Netzen, insbesondere zur kontrollierbaren Werbungsentgegennahme mit preisreduzierten Telefon- bzw. Datenübertragungsgebühren für die Beworbenen zu schaffen, das technisch sehr einfach zu realisieren ist und gleichzeitig noch die Entgegennahme der jeweiligen Werbung registriert.

Die erfindungsgemäße Lösung der Aufgabe ist im Kennzeichen des Patentanspruchs 1 charakterisiert. Weitere Lösungen sind in den Patentansprüchen 2 und 3 charakterisiert.

Das erfindungsgemäße Verfahren sowie die kontrollierbare Werbungsentgegennahme in Verbindung mit preisreduzierten Telefon- bzw. Datenübertragungsgebühren hat gegenüber der bisherigen Werbung auf Datenübertragungs- bzw. Telefonleitungen den Vorteil, daß die Beworbenen durch die Erlangung von Gebührenermäßigungen bzw. kostenfreien Zeiteinheiten für das Telefonieren, die Datenübertragung oder den Internetzugang positiv motiviert werden, ohne daß technisch komplizierte Mittel erforderlich sind. Die besondere Aufmerksamkeit der Beworbenen wird dadurch erreicht, daß zu einer nicht vorhersehbaren Zeit oder zu einer bestimmten Zeit während oder gegen Ende der Werbung eine akustische oder visuelle Aufforderung an die Beworbenen ergeht, eine bestimmte oder zufällig vorgegebene Taste oder Tastenfolge oder akustische Antwort oder sonstige Signaleingabe einzugeben, mit der bestätigt wird, zugesehen bzw. zugehört zu haben.

Dabei ist besonders vorteilhaft, daß gemäß der vorliegenden Lösung durch die nicht vorhersehbare Zeit der Aufforderung an die Beworbenen oder aber durch die nicht vorhersehbare einzugebende Taste oder Tastenfolge oder akustische Antwort oder sonstige Signaleingabe ein automatisiertes Reagieren vermieden und die volle Aufmerksamkeit der Beworbenen erreicht wird. Dadurch wird verhindert, daß eine automatisierte Elektronik die Anwesenheit eines Beworbenen zeitweise ersetzt, analog dem mittlerweile technisch möglichen automatisierten Ausblenden von TV-Werbung bei Fehlen des Senderlogos, das nur bei Spielfilmen eingeblendet wird.

Die Aussendung eines oder mehrerer elektrischer Signale des jeweils Beworbenen an den jeweiligen Netzwerkbetreiber durch das Betätigen einer bestimmten oder zufällig vorgegebenen Taste oder Tastenfolge bzw. durch eine akustische Antwort beim Telefonieren oder sonstige Signaleingabe während oder nach der Werbung ermöglicht es, daß die ausgesendeten Signale von dem Netzwerkbetreiber automatisiert erkannt und verarbeitet werden können, um eine Gebührenreduktion bzw. kostenfreie Zeiteinheiten für den Teilnehmer vorzunehmen und statistische Auswertungen für die Werbeindustrie vorzunehmen. Wesentlich ist auch, daß durch die einfache technische Realisierung und die Struktur des Verfahrens die Freiwilligkeit der Teilnahme an dem Verfahren zur kontrollierbaren Werbungsentgegennahme in Verbindung mit preisreduzierten Telefon- bzw. Datenübertragungsgebühren gewährleistet ist, daß der Beworbene durch eine sofortige Gebührenersparnis mittels eigener Aktivität hochgradig motiviert wird.

Das Verfahren zur Steuerung der Gebührenbelastung in intelligenten Netzen, insbesondere zur kontrollierbaren Werbungsentgegennahme in Verbindung mit preisreduzierten Telefon- bzw. Datenübertragungsgebühren wird durch folgende Schritte realisiert:

Zu einer nicht vorhersehbaren Zeit oder zu einer bestimmten Zeit während oder gegen Ende einer Werbung wird eine akustische oder visuelle Aufforderung an die Beworbenen gesendet, eine bestimmte oder zufällig vorgegebene Taste oder Tastenfolge oder akustische Antwort oder sonstige Signaleingabe einzugeben, eine Bestätigung durch den Beworbenen, daß er die Werbung gehört bzw. gesehen hat, Erzeugen eines oder mehrerer elektrischer Signale durch den Tastendruck und Senden dieser Signale an den jeweiligen Netzwerkbetreiber sowie automatisierte Erkennung und Verarbeitung der ausgesendeten Signale durch den Betreiber eines Netzes.

Durch die nicht vorhersehbare Zeit der Aufforderung an die Beworbenen oder aber die nicht vorhersehbare einzugebende Taste oder Tastenfolge oder akustische Antwort oder sonstige Signaleingabe wird ein automatisiertes Reagieren vermieden und die volle Aufmerksamkeit der Beworbenen erreicht. Auch wird der Einsatz einer automatisierten Elektronik hierdurch, wie bereits beschrieben, vermieden. Die Ergebnisse dieses Verfahrens können sowohl vom Netzwerkbetreiber als auch von der Werbeindustrie für statistische Zwecke benutzt werden.

## Patentansprüche

1. Verfahren zur Steuerung der Gebührenbelastung in intelligenten Netzen, insbesondere zur kontrollierbaren Werbungsentgegennahme in Verbindung mit preisreduzierten Telefon- und/oder Datenübertragungsgebühren durch eine oder mehrere Zielrufnummer(n) eines Verkehrsziels mit Endgeräten, dadurch gekennzeichnet,
daß zu einer nicht vorhersehbaren Zeit oder zu einer bestimmten Zeit während oder gegen Ende der Werbungsaussendung eine akustische oder visuelle Aufforderung an die Beworbenen erfolgt, eine bestimmte oder zufällig vorgegebene Taste oder Tastenfolge zu betätigen oder eine akustische Antwort bzw. sonstige Signaleingabe in das Endgerät einzugeben,
daß dadurch bestätigt wird, daß der Beworbene die Werbung erhalten hat,
daß durch das Betätigen einer bestimmten oder zufällig vorgegebenen Taste oder Tastenfolge bzw. durch eine akustische Antwort beim Telefonieren bzw. sonstige Signaleingabe während oder nach der Werbung ein oder mehrere entsprechende Signal(e) an den Netzwerkbetreiber ausgesendet wird bzw. werden,
daß der Netzwerkbetreiber die ausgesendeten Signale automatisiert erkennt und verarbeitet und
daß daraus Gebührenreduktionen bzw. kostenfreie Zeiteinheiten errechnet werden.

2. Verfahren nach Patentanspruch 1, dadurch gekennzeichnet,
daß die automatisiert erkannten und verarbeiteten ausgesendeten Signale für statistische Zwecke programmgesteuert ausgewertet werden.

3. Verfahren nach einem der Patentansprüche 1 oder 2, dadurch gekennzeichnet,
daß im jeweiligen Endgerät für das Bestätigen der Werbeentgegennahme eine bestimmte Taste angeordnet ist oder eine Tastenfolge mit vorhandenen Tasten bzw. eine Spracheingabe bzw. sonstige Signaleingabe erfolgt und
daß das automatisierte Erkennen und Verarbeiten der ausgesendeten Signale prozessorgesteuert im Rechner des intelligenten Netzes erfolgt.
